# EUROPEAN PATENT APPLICATION

(11) **EP 4 810 898 A1**
(43) Date of publication of application: **23.09.2026**
(21) Application number: 26164951.1
(22) Date of filing: 16.03.2026
(51) Int. Cl.: G01B 11/06, G01N 21/47

(54) **MEASUREMENT APPARATUS**

(30) Priority: 21.03.2025 JP 2025047405
(71) Applicant: SCREEN Holdings Co., Ltd., Kyoto-shi, Kyoto 602-8585 (JP)
(72) Inventor: OSUMI, Yu, Kyoto, 602-8585 (JP)
(74) Representative: Kilian Kilian & Partner mbB

(57) **Abstract**

Realized is a measurement that accommodates diverse repeating patterns of an object to be measured. A measurement apparatus (1) includes: a first light receiving head (22) which receives first reflected light that is first inspection light having been projected from vertically above and reflected by a sample (100); a second light receiving head (32) which receives second reflected light that is second inspection light having been projected from obliquely above and reflected by the sample; and a processor (60), the first light receiving head having a first shutter (23) capable of adjusting an amount of the first reflected light received, the second light receiving head having a second shutter (33) capable of adjusting an amount of the second reflected light received, and the processor controlling an opening and closing amount of each of the first shutter and the second shutter.

## Description

### Technical Field

The present disclosure relates to an optical critical dimension (OCD) technology for measuring a repeating pattern that is formed by a microstructure, and particularly to a measurement apparatus that measures, by spectroscopy, a pattern shape having a step.

### Background Art

Conventionally, development of an OCD technology has been in progress. In the OCD technology, a cross section of a specific pattern shape formed by a microstructure of a semiconductor or the like is measured in a non-destructive and non-contact manner. One example of the OCD technology is scatterometry using light waves. In this scatterometry, basically, characteristics that depend on a shape of a repeating line-and-space pattern of reflected light in a light wavelength band are determined by numerical analysis, and the shape of the pattern is obtained by comparison with an actually measured value.

Measurement methods using scatterometry include a normal incidence method and an oblique incidence method. Note that these two methods correspond to reflectometry (normal incidence) and ellipsometry (oblique incidence) for examining a thickness and a material constant of a thin film. Furthermore, as an example of a technology in which the normal incidence method is applied to shape measurement, there is a technology disclosed in Patent Literature 1.

### Citation List

### [Patent Literature]

[Patent Literature 1]
U.S. Patent No. 6898537

### Summary of Invention

### Technical Problem

However, in a conventional shape measurement technology, inspection light is projected from either a vertical direction or an oblique direction with respect to an object to be measured, that is, a light projection direction is limited to a single direction. Thus, in the conventional shape measurement technology, it is highly likely that a measurable pattern shape is restricted. Therefore, it may not be possible to perform a measurement that accommodates diverse shapes and dimensions of the repeating pattern of the object to be measured.

An object of an aspect of the present disclosure is to realize a measurement that accommodates diverse shapes and dimensions of a repeating pattern of an object to be measured.

### Solution to Problem

In order to solve the above problem, a measurement apparatus according to an aspect of the present invention is a measurement apparatus that measures a pattern shape having a step, including: a measurement stage on which a sample having the pattern shape is placed; a first light projecting head which is disposed above the sample so as to overlap the sample in plan view from vertically above relative to an upper surface of the measurement stage and which projects first inspection light from vertically above with respect to the sample; a first light receiving head which receives first reflected light that is the first inspection light having been reflected by the sample; a second light projecting head which is disposed obliquely above the upper surface of the measurement stage and which projects second inspection light from obliquely above with respect to the sample; a second light receiving head which receives second reflected light that is the second inspection light having been reflected by the sample; a first fiber, one end of which is optically connected to the first light receiving head; a second fiber, one end of which is optically connected to the second light receiving head; a slit which is optically connected to the other end of the first fiber and the other end of the second fiber; a spectrometer which has the slit; and a processor, the first light receiving head having a first shutter which is capable of adjusting an amount of the first reflected light received, the second light receiving head having a second shutter which is capable of adjusting an amount of the second reflected light received, and the processor controlling an opening and closing amount of each of the first shutter and the second shutter.

### Advantageous Effects of Invention

An aspect of the present disclosure makes it possible to achieve a measurement that accommodates diverse shapes and dimensions of a repeating pattern of an object to be measured.

### Brief Description of Drawings

Fig. 1 is a diagram illustrating a configuration example of a measurement apparatus according to an embodiment of the present disclosure.
Fig. 2 is a diagram illustrating a configuration example of a light source that emits first inspection light and second inspection light.
Fig. 3 is a diagram illustrating configuration examples of a non-branching-side waveguide of a fiber bundle.
Fig. 4 is a diagram illustrating configuration examples of a branching-side waveguide of a fiber bundle.
Fig. 5 is a cross-sectional view illustrating an example of a pattern shape in a sample.
Fig. 6 is a diagram illustrating a variation of a measurement head.

### Description of Embodiments

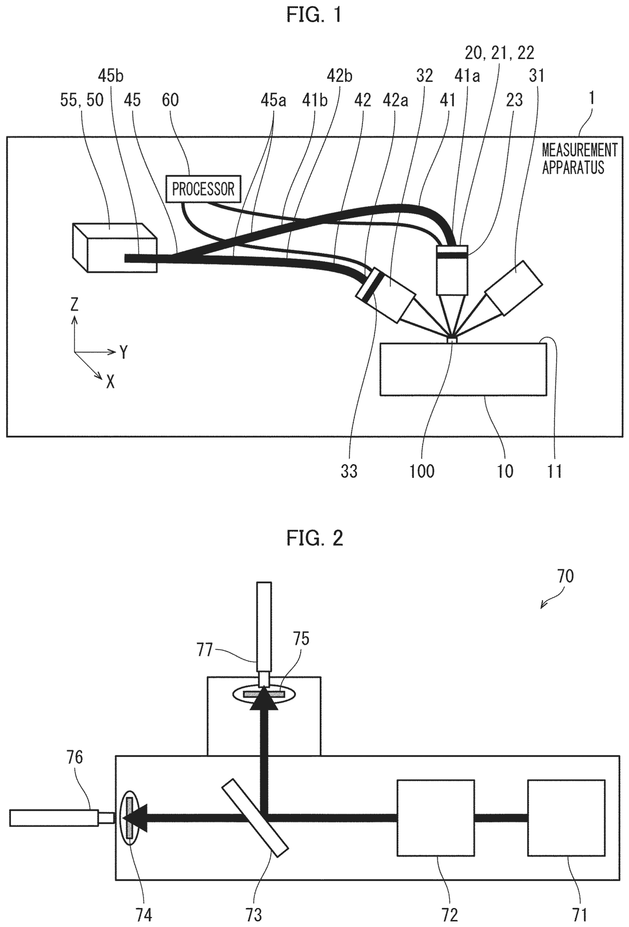

Fig. 1 is a diagram illustrating a configuration example of a measurement apparatus 1 according to an embodiment of the present disclosure. The measurement apparatus 1 measures a pattern shape having a step. As illustrated in Fig. 1, the measurement apparatus 1 includes a measurement stage 10, a first light projecting head 21, a first light receiving head 22, a second light projecting head 31, a second light receiving head 32, a first fiber 41, a second fiber 42, a slit 55, a spectrometer 50, and a processor 60. The measurement apparatus 1 further includes a fiber bundle 45. Arrangement of components provided in the measurement apparatus 1 is not limited as long as the components each can perform a function of the component.

The measurement stage 10 is a stage on which a sample 100 that has a pattern shape having a step is placed. Specifically, the measurement stage 10 has an upper surface 11. The sample 100 is placed on the upper surface 11. The upper surface 11 may be a horizontal surface. The horizontal surface as used herein does not necessarily mean a perfectly horizontal surface, and may be a surface that can be considered substantially horizontal. For example, in a case where an inclination of the upper surface 11 with respect to a perfectly horizontal surface is within 5°, the upper surface 11 can be considered as a substantially horizontal surface.

The sample 100 is, for example, a substrate made of, for example, a semiconductor. The measurement apparatus 1 is for performing, for example, a measurement of a thickness of a thin film that is formed on the sample 100 or a measurement of a pattern after an etching process on the sample 100.

The first light projecting head 21 is disposed above the sample 100 so as to overlap the sample 100 in plan view from a vertically upward direction (vertically above) relative to the upper surface 11 of the measurement stage 10. The first light projecting head 21 projects first inspection light from the vertically upward direction with respect to the sample 100. The term "vertically upward direction (vertically above)" as used herein does not necessarily mean a perfectly vertically upward direction, and may be any direction that can be considered as a substantially vertically upward direction. For example, a direction at an inclination within 5° or less with respect to the perfectly vertically upward direction can be considered as the substantially vertically upward direction.

The first light receiving head 22 receives first reflected light, which is the first inspection light that has been reflected by the sample 100. The first light receiving head 22 has a first shutter 23 that is capable of adjusting an amount of the first reflected light received. The first shutter 23 is configured to be capable of adjusting an amount of the first inspection light projected, in addition to the amount of the first reflected light received. An opening and closing operation of the first shutter 23 is carried out by a motor (not illustrated). The opening and closing operation is controlled by a control signal which the motor receives from the processor 60.

In the example illustrated in Fig. 1, the measurement apparatus 1 includes a measurement head 20 that fixes and houses the first light projecting head 21 and the first light receiving head 22. The measurement head 20 is a housing that has a space therein for housing and fixing the first light projecting head 21 and the first light receiving head 22. The measurement head 20 has, at one end of the measurement head 20, an opening that allows the light projected from the first light projecting head 21 to pass therethrough and that allows the light received by the first light receiving head 22 to pass therethrough, and has, at the other end of the measurement head 20, an opening that allows fibers connected to the first light projecting head 21 and the first light receiving head 22 to pass therethrough. In this case, the first shutter 23 can adjust the amount of the first inspection light projected, in addition to the amount of the first reflected light received.

Note that the measurement apparatus 1 does not necessarily have to include the measurement head 20. In such a case, positions of the first light projecting head 21 and the first light receiving head 22 are each individually fixed with respect to the measurement stage 10.

The second light projecting head 31 projects the second inspection light from obliquely above with respect to the sample 100. The second light projecting head 31 is disposed obliquely above the upper surface 11 of the measurement stage 10. An incident angle of the second inspection light with respect to the horizontal surface is, for example, 60°, but may be another angle that is greater than 0° and less than 90°.

The second light receiving head 32 receives second reflected light, which is the second inspection light that has been reflected by the sample 100. The second light receiving head 32 is disposed, on a path of the second reflected light, obliquely above the upper surface 11 of the measurement stage 10. The second light receiving head 32 has a second shutter 33 that is configured to be capable of adjusting an amount of the second reflected light received. An opening and closing operation of the second shutter 33 is carried out by a motor (not illustrated). The opening and closing operation is controlled by a control signal which the motor receives from the processor 60.

Fig. 2 is a diagram illustrating a configuration example of a light source 70 that emits the first inspection light and the second inspection light. The measurement apparatus 1 may further include the light source 70 in addition to the configuration illustrated in Fig. 1. Alternatively, the light source 70 may be an external light source which is separate from the measurement apparatus 1. As illustrated in Fig. 2, the light source 70 includes a halogen lamp 71, a deuterium lamp 72, a half mirror 73, a first light projection shutter 74, a second light projection shutter 75, a first light projection fiber 76, and a second light projection fiber 77. In Fig. 2, arrows indicate paths of light in the light source 70.

The halogen lamp 71 is a light source that emits visible light. The deuterium lamp 72 is a light source that emits ultraviolet light. The deuterium lamp 72 has a see-through structure. The deuterium lamp 72 is disposed on a path of the visible light such that the optical axis of the ultraviolet light which is emitted by the deuterium lamp 72 coincides with the optical axis of the visible light which is emitted by the halogen lamp 71. For this reason, the light source 70 can emit the visible light from the halogen lamp 71 and the ultraviolet light from the deuterium lamp 72 as if they were a single light having a wide wavelength band. For example, the light source 70 may include a deuterium lamp which has a light wavelength band of approximately 200 nm to 400 nm and a halogen lamp which has a light wavelength band of approximately 400 nm to 1000 nm. In a case where these lamps are used together as the light source 70, light in a wavelength band of 200 nm to 1000 nm can be emitted as the first inspection light and the second inspection light. However, the wavelength bands of the first inspection light and the second inspection light are not limited to the above.

The half mirror 73 splits the light from the halogen lamp 71 and the deuterium lamp 72 into the first inspection light and the second inspection light. In the example illustrated in Fig. 2, the light that has passed through the half mirror 73 becomes the first inspection light, and the light that has been reflected by the half mirror 73 becomes the second inspection light. In the measurement apparatus 1, contrary to the example illustrated in Fig. 2, the light that has been reflected by the half mirror 73 may become the first inspection light, and the light that has passed through the half mirror 73 may become the second inspection light. A ratio of transmitted light to reflected light at the half mirror 73 may be, for example, 50:50, but the ratio is not limited to this.

The first light projection shutter 74 is configured to be capable of adjusting an amount of the first inspection light emitted from the first light projecting head 21. The second light projection shutter 75 is configured to be capable of adjusting an amount of the second inspection light emitted from the second light projecting head 31. Opening and closing operations of the first light projection shutter 74 and the second light projection shutter 75 are performed by a motor (not illustrated). The opening and closing operations are controlled by a control signal which the motor receives from the processor 60.

In the light source 70, one or both of the first light projection shutter 74 and the second light projection shutter 75 may be omitted. However, from the viewpoint of improving measurement accuracy, it is preferable that the light source 70 include the first light projection shutter 74 and the second light projection shutter 75.

The first light projection fiber 76 guides, to the first light projecting head 21, the first inspection light that has passed through the first light projection shutter 74. The second light projection fiber 77 guides, to the second light projecting head 31, the second inspection light that has passed through the second light projection shutter 75. The first light projection fiber 76 and the second light projection fiber 77 may be general optical fibers.

The measurement apparatus 1 may include a light source having a configuration which is different from that of the light source 70. In that case, the configuration of the light source is not particularly limited as long as it is possible to project light in a wavelength band which is necessary for measurement by the measurement apparatus 1. Further, the light source does not necessarily have to have a configuration that is capable of emitting the first inspection light and the second inspection light from a single light source. For example, the measurement apparatus 1 may separately include a light source that emits the first inspection light and a light source that emits the second inspection light.

With reference back to Fig. 1, the first fiber 41 has one end 41a that is optically connected to the first light receiving head 22. The second fiber 42 has one end 42a that is optically connected to the second light receiving head 32. The first fiber 41 and the second fiber 42 may be general optical fibers.

The slit 55 is optically connected to the other end 41b of the first fiber 41 and the other end 42b of the second fiber 42. The slit 55 has a width of, for example, 50 µm, but the width is not limited to this.

The fiber bundle 45 has two branching-side waveguides 45a and one non-branching-side waveguide 45b. The branching-side waveguides 45a are optically connected to the other end 41b of the first fiber 41 and the other end 42b of the second fiber 42. The non-branching-side waveguide 45b is optically connected to the slit 55. In this case, it can be said that the slit 55 is optically connected, via the fiber bundle 45, to the other end 41b of the first fiber 41 and the other end 42b of the second fiber 42. In a case where the measurement apparatus 1 includes the fiber bundle 45, the light received by each of the first light receiving head 22 and the second light receiving head 32 can be inputted to the spectrometer 50 in a simple configuration.

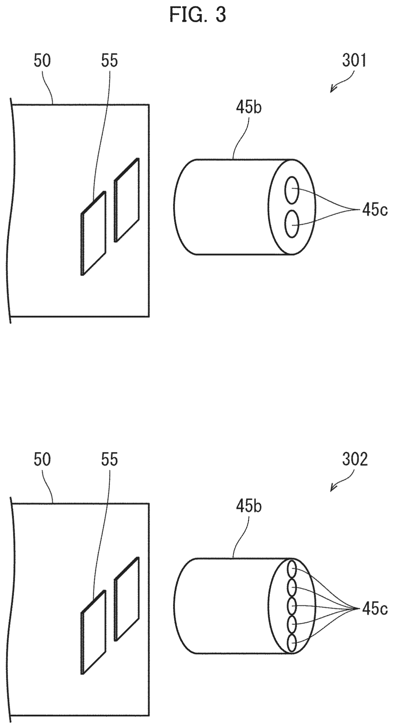

Fig. 3 is a diagram illustrating configuration examples of the non-branching-side waveguide 45b of the fiber bundle 45. Fig. 3 also illustrates the slit 55 that is optically connected to the non-branching-side waveguide 45b. In Fig. 3, reference sign 301 indicates an example of a basic configuration of the non-branching-side waveguide 45b of the fiber bundle 45. Further, reference sign 302 indicates a variation of the configuration of the non-branching-side waveguide 45b of the fiber bundle 45.

In the example of the basic configuration indicated by reference sign 301, two cores 45c are arranged along a certain arrangement direction at an end of the non-branching-side waveguide 45b. In this case, one of the two cores 45c guides the first reflected light that has been received by the first light receiving head 22. Further, the other of the two cores 45c guides the second reflected light that has been received by the second light receiving head 32.

In the variation indicated by reference sign 302, five cores 45c are arranged along a certain arrangement direction at the end of the non-branching-side waveguide 45b. In this case, it is only necessary that there are at least one core 45c which guides the first reflected light that has been received by the first light receiving head 22 and at least one core 45c which guides the second reflected light that has been received by the second light receiving head 32.

In the examples illustrated in Fig. 3, in both of the configurations indicated by reference signs 301 and 302, a direction in which the slit 55 is formed and the arrangement direction of the plurality of cores 45c at the end of the non-branching-side waveguide 45b of the fiber bundle 45 are parallel to each other. This reduces loss of light when the first reflected light that has been received by the first light receiving head 22 and the second reflected light that has been received by the second light receiving head 32 enter the slit 55 from the fiber bundle 45.

The number of the plurality of cores 45c in the non-branching-side waveguide 45b may be different from those in the examples illustrated in Fig. 3. Even in such a case, it is preferable that the plurality of cores 45c be arranged along a certain arrangement direction. Further, it is preferable that the direction in which the slit 55 is formed and the arrangement direction of the plurality of cores 45c be parallel to each other.

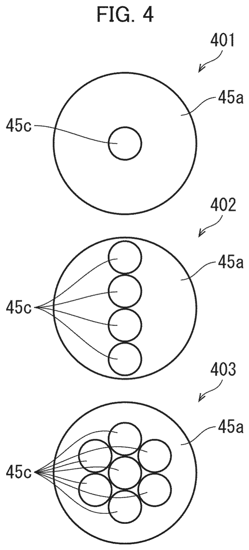

Fig. 4 is a diagram illustrating configuration examples of the branching-side waveguide 45a of the fiber bundle 45. In Fig. 4, reference numerals 401 to 403 indicate respective examples of a configuration of the branching-side waveguide 45a.

The branching-side waveguide 45a may have a single-core configuration having a single core 45c, as indicated by reference sign 401. Alternatively, the branching-side waveguide 45a may have a one-dimensional array multi-core configuration in which the plurality of cores 45c are one-dimensionally arranged as indicated by reference sign 402. Alternatively, the branching-side waveguide 45a may have a two-dimensional array multi-core configuration in which the plurality of cores 45c are two-dimensionally arranged as indicated by reference sign 403.

In a case where the branching-side waveguide 45a has the multi-core configuration like that indicated by reference sign 402 or 403, not all of the cores 45c need to guide the first reflected light or the second reflected light. It is only necessary that at least one core 45c guides the first reflected light or the second reflected light. Furthermore, the configuration of the branching-side waveguide 45a may be the same on the side connected to the first fiber 41 and on the side connected to the second fiber 42 or different between these sides.

The measurement apparatus 1 does not necessarily have to include the fiber bundle 45. In a case where the measurement apparatus 1 does not include the fiber bundle 45, the slit 55 may be directly connected to both the other end 41b of the first fiber 41 and the other end 42b of the second fiber 42.

With reference back to Fig. 1, the spectrometer 50 measures a pattern shape on a surface of the sample 100 by spectrally dispersing the first reflected light and the second reflected light. The spectrometer 50 has the slit 55 illustrated in Fig. 3.

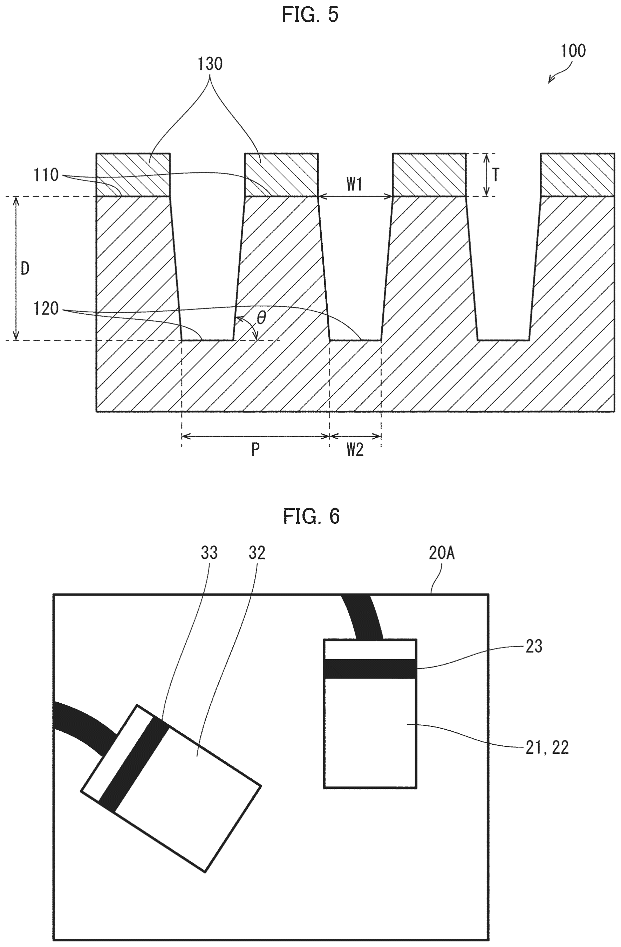

Fig. 5 is a cross-sectional view illustrating an example of a pattern shape on the sample 100. For simplicity, in Fig. 5, only some of a plurality of existing constituent elements are indicated by reference signs.

The pattern shape on the sample 100 is an arbitrary repeating pattern shape. The repeating pattern shape is, for example, a repeating line-and-space pattern shape. In the example illustrated in Fig. 5, the pattern shape is a masked trench having a taper angle. Specifically, in the pattern shape illustrated in Fig. 5, a plurality of grooves 120 are formed at a constant pitch on a surface 110 of the sample 100. The plurality of grooves 120 extend in a direction perpendicular to a paper surface. Further, the plurality of grooves 120 have a trapezoidal cross-sectional shape. In addition, a mask 130 is applied to a region where the grooves 120 are not formed on the surface 110 of the sample 100.

In this case, the spectrometer 50 can measure, on the basis of reflectance of the first reflected light and reflectance of the second reflected light, an upper opening width W1, a lower opening width W2, a depth D, a pitch P, and a taper angle θ of the grooves 120. A measurable detection resolution depends on, for example, performance of an optical system and the wavelength band of the light source, but it is possible to measure, for example, 1 µm to several µm for the upper opening width W1, 0.5 µm to several µm for the lower opening width W2, approximately 2 µm for the depth D, approximately 2 µm for the pitch P, 80° to 90° for the taper angle θ, and approximately 0.5 µm for a film thickness T of the mask 130. The taper angle θ is an angle of a side surface with respect to a bottom surface of a groove 120. Furthermore, the spectrometer 50 can also measure the film thickness T of the mask 130.

Note that, in the repeating line-and-space pattern shape on the sample 100, a cross section of the grooves 120 does not necessarily have to be trapezoidal. Further, the mask 130 does not have to be applied to the surface 110. In addition, the pattern shape on the sample 100 is not limited to the repeating line-and-space pattern shape.

With reference back to Fig. 1, the processor 60 controls an operation of each section provided in the measurement apparatus 1. The processor 60 controls, for example, an opening and closing amount of each of the first shutter 23 and the second shutter 33. This allows the measurement apparatus 1 to carry out a measurement using a single apparatus, by projecting inspection light onto the sample 100 from both of the vertical direction and the oblique direction. Therefore, the measurement apparatus 1 makes it possible to achieve a measurement that accommodates diverse shapes and dimensions of a repeating pattern of an object to be measured.

Furthermore, in a case where different spectrometers are used for a measurement using the first inspection light from the vertical direction and a measurement using the second inspection light from the oblique direction, measurement accuracy may decrease due to variation between the spectrometers. According to the measurement apparatus 1, since spectroscopy is performed by the single spectrometer 50, a decrease in measurement accuracy due to the variation between the spectrometers does not occur. Therefore, according to the measurement apparatus 1, the measurement accuracy can be improved. Furthermore, according to the measurement apparatus 1, the number of spectrometers is reduced as compared with a case where a plurality of spectrometers are used. Thus, it is possible to achieve size reduction and cost reduction of the measurement apparatus 1.

Specifically, the processor 60 controls the opening and closing amount of each of the first shutter 23 and the second shutter 33 such that in a case where one of the first shutter 23 and the second shutter 33 is in an open state, the other is in a closed state. This makes it possible to reduce a decrease in measurement accuracy due to stray light received by one of the first light receiving head 22 and the second light receiving head 32 during measurement by the other.

Further, the processor 60 may control the opening and closing amount of each of the first light projection shutter 74 and the second light projection shutter 75 that are provided in the light source 70. For example, the processor 60 may control the opening and closing amount of each of the first light projection shutter 74 and the second light projection shutter 75 such that in a case where one of the above shutters is in an open state, the other of the shutters is in a closed state. In this case, of the first inspection light and the second inspection light, one which is not used for measurement is no longer projected onto the sample 100. This makes it possible to reduce a decrease in measurement accuracy that occurs in a case where the inspection light which is not used for measurement becomes stray light.

For example, during a measurement using the first inspection light, the processor 60 sets the first light projection shutter 74 and the first shutter 23 in an open state, and sets the second light projection shutter 75 and the second shutter 33 in a closed state. On the other hand, during a measurement using the second inspection light, the processor 60 sets the second light projection shutter 75 and the second shutter 33 in an open state, and sets the first light projection shutter 74 and the first shutter 23 in a closed state.

Further, in a case where the first shutter 23 is capable of adjusting the amount of the first inspection light projected, the first inspection light is blocked by the first shutter 23 and is no longer projected onto the sample 100 during a measurement using the second light receiving head 32. In this case, for example, even in a case where the first light projection shutter 74 is omitted from the light source 70, it is possible to reduce a decrease in measurement accuracy due to stray light that has been received by the first light receiving head 22 during the measurement using the second light receiving head 32.

### (Variation)

Fig. 6 is a diagram illustrating an example of a measurement head 20A, which is a variation of the measurement head 20. The measurement head 20A, like the measurement head 20 described above, fixes and houses the first light projecting head 21 and the first light receiving head 22. The measurement head 20A further fixes and houses the second light receiving head 32. This makes it possible to align the position measured by the first light receiving head 22 and the position measured by the second light receiving head 32 with higher accuracy.

Aspects of the present invention can also be expressed as follows:
A measurement apparatus according to an aspect of the present invention is a measurement apparatus that measures a pattern shape having a step, including: a measurement stage on which a sample having the pattern shape is placed; a first light projecting head which is disposed above the sample so as to overlap the sample in plan view from vertically above relative to an upper surface of the measurement stage and which projects first inspection light from vertically above with respect to the sample; a first light receiving head which receives first reflected light that is the first inspection light having been reflected by the sample; a second light projecting head which is disposed obliquely above the upper surface of the measurement stage and which projects second inspection light from obliquely above with respect to the sample; a second light receiving head which receives second reflected light that is the second inspection light having been reflected by the sample; a first fiber, one end of which is optically connected to the first light receiving head; a second fiber, one end of which is optically connected to the second light receiving head; a slit which is optically connected to the other end of the first fiber and the other end of the second fiber; a spectrometer which has the slit; and a processor, the first light receiving head having a first shutter which is capable of adjusting an amount of the first reflected light received, the second light receiving head having a second shutter which is capable of adjusting an amount of the second reflected light received, and the processor controlling an opening and closing amount of each of the first shutter and the second shutter.

Further, in a measurement apparatus according to an aspect of the present invention, the processor controls the opening and closing amount such that in a case where one of the first shutter and the second shutter is set in an open state, the other of the first shutter and the second shutter is set in a closed state.

Further, a measurement apparatus according to an aspect of the present invention further includes a measurement head which fixes and houses the first light projecting head and the first light receiving head, the first shutter being capable of adjusting the amount of the first inspection light projected, in addition to the amount of the first reflected light received.

Further, in a measurement apparatus according to an aspect of the present invention, the measurement head further fixes and houses the second light receiving head.

Further, a measurement apparatus according to an aspect of the present invention further includes a fiber bundle, the fiber bundle having a branching-side waveguide which is optically connected to the other end of the first fiber and the other end of the second fiber, and the fiber bundle having a non-branching-side waveguide which is optically connected to the slit.

Further, in a measurement apparatus according to an aspect of the present invention, a direction in which the slit is formed and an arrangement direction of a plurality of cores at an end of the non-branching-side waveguide of the fiber bundle are parallel to each other.

Further, in a measurement apparatus according to an aspect of the present invention, the pattern shape is a repeating line-and-space pattern shape.

### Reference Signs List

1 measurement apparatus
10 measurement stage
11 upper surface
20, 20A measurement head
21 first light projecting head
22 first light receiving head
23 first shutter
31 second light projecting head
32 second light receiving head
33 second shutter
41 first fiber
42 second fiber
45 fiber bundle
50 spectrometer
55 slit
60 processor

## Claims

1. A measurement apparatus that measures a pattern shape having a step, comprising:
a measurement stage on which a sample having the pattern shape is placed;
a first light projecting head which is disposed above the sample so as to overlap the sample in plan view from vertically above relative to an upper surface of the measurement stage and which projects first inspection light from vertically above with respect to the sample;
a first light receiving head which receives first reflected light that is the first inspection light having been reflected by the sample;
a second light projecting head which is disposed obliquely above the upper surface of the measurement stage and which projects second inspection light from obliquely above with respect to the sample;
a second light receiving head which receives second reflected light that is the second inspection light having been reflected by the sample;
a first fiber, one end of which is optically connected to the first light receiving head;
a second fiber, one end of which is optically connected to the second light receiving head;
a slit which is optically connected to the other end of the first fiber and the other end of the second fiber;
a spectrometer which has the slit; and
a processor,
the first light receiving head having a first shutter which is capable of adjusting an amount of the first reflected light received,
the second light receiving head having a second shutter which is capable of adjusting an amount of the second reflected light received, and
the processor controlling an opening and closing amount of each of the first shutter and the second shutter.

2. The measurement apparatus according to claim 1, wherein the processor controls the opening and closing amount such that in a case where one of the first shutter and the second shutter is set in an open state, the other of the first shutter and the second shutter is set in a closed state.

3. The measurement apparatus according to claim 1, further comprising a measurement head which fixes and houses the first light projecting head and the first light receiving head,
the first shutter being capable of adjusting the amount of the first inspection light projected, in addition to the amount of the first reflected light received.

4. The measurement apparatus according to claim 3, wherein the measurement head further fixes and houses the second light receiving head.

5. The measurement apparatus according to claim 1, further comprising a fiber bundle,
the fiber bundle having a branching-side waveguide which is optically connected to the other end of the first fiber and the other end of the second fiber, and
the fiber bundle having a non-branching-side waveguide which is optically connected to the slit.

6. The measurement apparatus according to claim 5, wherein a direction in which the slit is formed and an arrangement direction of a plurality of cores at an end of the non-branching-side waveguide of the fiber bundle are parallel to each other.

7. The measurement apparatus according to claim 1, wherein the pattern shape is a repeating line-and-space pattern shape.
